# EUROPÄISCHE PATENTSCHRIFT

(11) **EP 1 104 858 B1**
(45) Veröffentlichungstag und Bekanntmachung des Hinweises auf die Patenterteilung: **12.04.2006**
(21) Anmeldenummer: 00122260.3
(22) Anmeldetag: 19.10.2000
(51) Int. Cl.: F16H 3/34, B41F 13/012, F16H 35/00, B41F 13/00

(54) **Vorrichtung zur Sicherung eines korrekten Zahneingriffes beim Koppeln zweier Zahnräder**
Device to ensure correct tooth engagement of two gears
Dispositif pour assurer l'engrenement correct de deux engrenages

(30) Priorität: 08.11.1999 DE 19953664
(43) Veröffentlichungstag der Anmeldung: 06.06.2001
(73) Patentinhaber: Heidelberger Druckmaschinen Aktiengesellschaft, 69115 Heidelberg (DE)
(72) Erfinder: Friedrichs, Jens, 69151 Neckargemünd (DE); Heiler, Peter, 76694 Forst (DE); Kern, Arno, 76703 Kraichtal (DE); Kropp, Frank, 69256 Mauer (DE); Schaum, Frank, 69151 Neckargemünd (DE)

(56) Entgegenhaltungen:
- EP-A- 0 893 625
- DE-B- 1 095 850
- DE-C- 4 226 392

## Beschreibung

Die Erfindung betrifft eine Vorrichtung zur Sicherung eines korrekten Zahneingriffs beim Einkoppeln eines verstellbaren ersten Zahnrades in ein zweites Zahnrad einer bedruckstoffverarbeitenden Maschine, bestehend aus einer ersten Verstelleinrichtung zur Verstellung des ersten Zahnrades zum zweiten Zahnrad hin beim Einkoppeln, einem Vorsprung sowie einer Führung zum Führen des Vorsprunges beim Einkoppeln, nach dem Oberbegriff des Anspruchs 1.

Solche Vorrichtungen sind erforderlich, um entkoppelte Zahnräder beim Einkoppeln positionsgenau zu einem Räderzug zusammenzuführen.

Bei einer der eingangs genannten Gattung entsprechenden und in der DE 42 26 392 C1 beschriebenen Vorrichtung ist an einem in einem schwenkbaren Gestellteil aufgenommenen ersten Zahnrad ein Federbolzen und an einem in einem ortsfesten Gestellteil aufgenommenen zweiten Zahnrad ein Segmentring mit einer Zentriemut angeordnet. Der Federbolzen ist zwar um ein das schwenkbare Gestellteil mit dem ortsfesten Gestellteil verbindendes Drehgelenk nicht jedoch um die Mittelachse des ersten Zahnrades schwenkbar, weil der Federbolzen mit einer Lasche am schwenkbaren Gestellteil befestigt ist. Vor dem Einkoppeln des ersten Zahnrades wird dieses mittels einer Klinke arretiert und wird das zweite Zahnrad mittels eines Maschinenantriebes annähernd auf eine Koppelstellung positioniert. Danach wird das schwenkbare Gestellteil zusammen mit dem ersten Zahnrad um das Drehgelenk zum ortsfesten Gestellteil hin geschwenkt, wobei der Federbolzen in die Zentriernut gleitet und das verdrehbare zweite Zahnrad gegenüber dem arretierten ersten Zahnrad so ausrichtet, daß ein bestimmter Zahn des ersten Zahnrades in eine für den Zahn vorgesehene Zahnlücke des zweiten Zahnrades geführt wird. Während des Einführens des bestimmten Zahnes des ersten Zahnrades in die Zahnlücke muß das erste Zahnrad durch das Schwenken in etwa in Radialrichtung des zweiten Zahnrades bewegt werden, damit die sogenannten Stichrichtung des bestimmten Zahnrades stimmt. Der Zahn ist bereits in die Zahnlücke eingetreten und der Räderzug somit geschlossen, bevor der Federbolzen die Zentriernut vollständig durchfahren hat und eine Drehbewegung des zweiten Zahnrades wieder freigibt.

Ungünstig an der in der genannten Patentschrift beschriebenen Vorrichtung ist, daß der Federbolzen bei nicht hinreichend genau auf die Koppelstellung positioniertem zweiten Zahnrad auf den Segmentring auftrifft und eine weitere Bewegung des schwenkbaren Gestellteils zum ortsfesten Gestellteil blockiert, wodurch der Einkoppelvorgang gestoppt wird. In diesem Fall ist ein erneuter Versuch notwendig, das zweite Zahnrad hinreichend genau auf die Koppelstellung zu positionieren, so daß die Zentriemut lagegenau zum Federbolzen steht.

Eine solche genaue Positionierung des zweiten Zahnrades ist aus nachfolgend erläuterten Gründen bei sogenannten "langen Druckmaschinen" mit einer großen Anzahl von in Reihe angeordneten Druck- oder Lackierwerken nicht immer möglich. Die Zahnräder der Gegendruckzylinder der Druck- oder Lackierwerke sind über Zahnräder von Bogentransporttrommeln zu einem durchgehenden Zahnräderzug verbunden. Ein bestimmtes Antriebszahnrad des Zahnräderzuges ist mit einem elektromotorischen Zentralantrieb verbunden, der über den Zahnräderzug jedes der Zahnräder des Zahnräderzuges rotativ antreibt.

Bei Stillstand des Zentralantriebes läßt sich das Antriebszahnrad praktisch nicht verdrehen. Je mehr Zahnräder sich zwischen dem Antriebszahnrad und einem Abtriebszahnrad des Zahnräderzuges befinden, desto mehr läßt sich das Abtriebszahnrad bei Stillstand der Druckmaschine verdrehen. Ursache dafür ist, daß jede Zahnradpaarung mit Zahnspiel behaftet ist. Je größer die Anzahl der zwischen dem mit dem Antriebszahnrad und dem Abtriebszahnrad liegenden Zahnrad-Koppelstellen ist, desto größer ist die Summe des Zahnspieles der Koppelstellen, um welche Summe sich das Abtriebszahnrad verdrehen läßt.

Ein im Zahnräderzug am weitesten vom Antriebszahnrad entferntes Zahnrad läßt sich somit um den größten Betrag verdrehen. Beispielsweise kann dieses Zahnrad einem Gegendruckzylinder eines am Ende der Druckmaschine angeordneten Lackierwerkes zugeordnet sein sowie dem in der genannten Patentschrift beschriebenen und auf Koppelstellung zu positionierenden zweiten Zahnrad entsprechen.

Auf Grund des sich bis zu diesem zweiten Zahnrad summierenden Zahnspieles der anderen Zahnräder im Zahnräderzug ist keine sichere Positionierung dieses zweiten Zahnrades durch den Zentralantrieb möglich, so daß es häufig vorkommen wird, daß der Federbolzen auf den Segmentring auftrifft und deshalb Positionskorrekturen erforderlich sind.

Ein weiterer Nachteil der in der genannten Patentschrift beschriebenen Vorrichtung zeigt sich, wenn das zweite Zahnrad, in welches das erste Zahnrad eingekoppelt werden soll, das mit dem Zentralantrieb verbundene Antriebszahnrad selbst oder ein im Zahnräderzug sehr nah an dem Antriebszahnrad liegendes Zahnrad ist. In diesem Fall würde sich bei Stillstand des Zentralantriebes das zweite Zahnrad zu wenig oder überhaupt nicht verdrehen lassen, da sich zwischen dem Zentralantrieb und dem zweiten Zahnrad zu wenig oder überhaupt kein für die Verdrehung des zweiten Zahnrades erforderliches Zahnspiel aufsummiert. Mit anderen Worten gesagt, wäre eine absolut genaue Positionierung des zweiten Zahnrades auf die Koppelstellung erforderlich, so daß die Zentriemut genau mittig zum Federbolzen steht. Selbst bei geringfügigem Versatz der Zentriernut zum Federbolzen, wobei dieser auf einer Anschrägung der Zentriemut auftrifft, wäre ein Einkoppeln des ersten Zahnrades in das zweite Zahnrad unmöglich, da der Federbolzen die Zentriernut und damit das zweite Zahnrad nicht aus der vom Zentralantrieb festgehaltenen Drehlage drücken könnte.

Somit ist die in der genannten Patentschrift beschriebene Vorrichtung nicht nur für das Koppeln der Zahnräder des vielen Druckwerken in Bedruckstofftransportrichtung nachgeordneten und damit dem Zentralantrieb fernen Lackierwerkes, welches beispielsweise zum abschließenden Aufbringen einer klaren Schutzlackierung auf ein Druckbild verwendet wird, sondern auch zum Koppeln von Zahnrädern eines den vielen Druckwerken vorgeordneten und damit dem Zentralantrieb nahen Lackierwerkes ungeeignet, welches zum Beispiel zum Aufbringen einer Deckweiß-Grundierung auf den Bedruckstoff vor dessen Bedrucken in den Druckwerken verwendet wird.
Deshalb liegt der Erfindung die Aufgabe zu Grunde, eine Vorrichtung zur Sicherung eines korrekten Zahneingriffs eines ersten Zahnrades in ein zweites Zahnrad zu schaffen, bei welcher die Lage des zweiten Zahnrades innerhalb eines Zahnräderzuges einer bedruckstoffverarbeitenden Maschine für ein störungsfreies Einkoppeln unerheblich ist.

Die gestellte Aufgabe wird durch eine Vorrichtung mit den Merkmalen des Anspruchs 1 gelöst.

Die erfindungsgemäße Vorrichtung zeichnet sich dadurch aus, daß der Vorsprung exzentrisch zu einem der beiden Zahnräder (dem ersten Zahnrad oder dem zweiten Zahnrad) angeordnet und mit diesem Zahnrad verbunden ist, so daß sich der Vorsprung bei einer Drehung dieses Zahnrades um eine Mittelachse dieses Zahnrades mit diesem Zahnrad mitdreht.

Ein Vorteil der erfindungsgemäßen Vorrichtung besteht darin, daß bei dieser eine Drehbarkeit des zweiten Zahnrades zum Einkoppeln des ersten Zahnrades nicht erforderlich ist. Bei der erfindungsgemäßen Vorrichtung ist auch keine Arretierung des ersten Zahnrades erforderlich und kann sich dieses beim Einkoppeln gegenüber dem zweiten Zahnrad ausrichten.

Ein weiterer Vorteil der erfindungsgemäßen Vorrichtung ist darin zu sehen, daß das zweite Zahnrad nicht mehr so genau auf Koppelstellung positioniert werden muß. Auch bei einer auf Grund des insgesamt vorhandenen Zahnspieles nur groben Positionierung des zweiten Zahnrades auf Koppelstellung ist stets gewährleistet, daß ein bestimmter Zahn des ersten Zahnrades in eine für diesen Zahn vorgesehene Zahnlücke des zweiten Zahnrades findet. Bei der erfindungsgemäßen Vorrichtung sind somit keine Korrekturen der Drehposition des zweiten Zahnrades erforderlich und erfolgt die ordnungsgemäße Zahnradkoppelung auf jeden Fall bereits beim ersten Mal.

Zudem ist vorteilhaft, daß die Verstellrichtung des ersten Zahnrades beim Eintritt des bestimmten Zahnes in die Zahnlücke von der Radialrichtung des zweiten Zahnrades und der Stichrichtung des bestimmten Zahnes abweichen kann. Mit anderen Worten gesagt, kann der Mittelpunkt des ersten Zahnrades während des Eintrittes von dessen Zahn in die Zahnlücke des zweiten Zahnrades abweichend von einer genau durch den Mittelpunkt des zweiten Zahnrades verlaufenden Richtung verstellt werden.

In den Unteransprüchen sind vorteilhafte Ausführungsformen der erfindungsgemäßen Vorrichtung genannt.

Bei einer hinsichtlich einer Drehwinkelausrichtung des ersten Zahnrades gegenüber dem zweiten Zahnrad beim Einkoppeln vorteilhaften Ausführungsform ist der Vorsprung, welcher ein von den Zähnen des ersten Zahnrades verschiedenes Element ist, am ersten Zahnrad befestigt oder angeformt.

Bei einer hinsichtlich einer von einer der achsparallelen Richtung abweichenden Verstellung des ersten Zahnrades hin zum zweiten Zahnrad beim Einkoppeln und von diesem weg beim Abkoppeln mittels einer Kette, an der das erste Zahnrad hängt, vorteilhaften Ausführungsform ist die erste Verstelleinrichtung zur linearen Verstellung des ersten Zahnrades aus einer Abstandsstellung in eine Eingriffsstellung relativ zum zweiten Zahnrad ausgebildet. Vorzugsweise ist die erste Verstelleinrichtung zur in vertikaler Richtung erfolgenden Verstellung des ersten Zahnrades aus der Abstandsstellung in die Eingriffsstellung und zurück als ein Kettengetriebe ausgebildet.

Bei einer hinsichtlich eines quer zur Führungsrichtung der Führung erfolgenden Aufsetzens des Vorsprunges auf die Führung vorteilhaften Ausführungsform ist die Führung eine rein kraftgepaarte und somit formschlußfreie Gleitführung.

Bei einer hinsichtlich einer besseren Laufruhe der aus den Zahnräder gebildeten Stirnradpaarung vorteilhaften Ausführungsform sind die Zahnräder mit zu deren Zahnradachsen schräg ausgerichteten Schrägverzahnungen versehen, wobei der Vorsprung und die Führung mit den Schrägverzahnungen korrespondierend ausgebildet sind. Letzteres ermöglicht vorteilhafterweise ein von verschiedenen Axialstellungen des ersten Zahnrades relativ zum zweiten Zahnrad unabhängiges Einkoppeln des ersten Zahnrades in das zweite Zahnrad.

Bei einer hinsichtlich der Ausbildung des Vorsprunges als ein der Führung dreidimensional angepaßtes Gegenstück vorteilhaften Ausführungsform entspricht eine an der Führung anliegende Stützfläche des Vorsprunges im Schrägungswinkel und in der Steigungsrichtung der Verzahnung des ersten Zahnrades. Bei dieser Ausführungsform weist die Führung eine im Schrägungswinkel und in der Steigungsrichtung der Verzahnung des zweiten Zahnrades entsprechende Fläche auf, an welcher der Vorsprung anliegt und beim Einkoppeln, je nach Ausbildung des Vorsprunges, entweder als ein Gleitschuh entlang gleitet oder als eine Kurvenrolle entlang rollt. Die Schrägungswinkel der Zahnräder sind zueinander gleich groß, so daß auch die Schrägungswinkel des Vorsprunges und der Führung zueinander gleich groß sind. Die Steigungsrichtungen der Verzahnungen der Zahnräder sind zueinander entgegengesetzt gerichtet und somit steigen auch die sich miteinander kontaktierenden Flächen des Vorsprunges und der Führung in zueinander entgegengesetzten Richtungen an. Beispielsweise ist das erste Zahnrad mit einer links steigenden Verzahnung versehen, deren Zahnflankenlinien entgegen dem Uhrzeigersinn verlaufen und ist das zweite Zahnrad mit einer rechts steigenden Verzahnung versehen, deren Zahnflankenlinien im Uhrzeigersinn verlaufen.

Bei einer hinsichtlich einer Verstellung der Rotationsphasenlage eines in Axialrichtung verschiebbar gelagerten Zahnrades (des ersten oder des zweiten Zahnrades) relativ zum anderen Zahnrad bei sich miteinander im Eingriff befindlichen und rotierenden Zahnrädern vorteilhaften Ausführungsform ist einem der beiden Zahnräder eine im folgenden als zweite Verstelleinrichtung bezeichnete Verstelleinrichtung zum Verschieben des Zahnrades in zum anderen Zahnrad achsparalleler Richtung zugeordnet.

Bei einer hinsichtlich einer Verstellung der Rotationsphasenlage des an- und abkoppelbaren ersten Zahnrades relativ zum zweiten Zahnrad vorteilhaften Ausführungsform ist das erste Zahnrad nicht nur zum Einkoppeln senkrecht zur Axialrichtung des zweiten Zahnrades verlagerbar, sondern auch im eingekoppelten Zustand mittels der zweiten Verstelleinrichtung achsparallel zum zweiten Zahnrad verschiebbar gelagert.

Bei einer hinsichtlich der Einstellung der Relativlage des Druckanfanges einer Druck- oder Lackform auf einem mit dem ersten Zahnrad verbundenen Auftragszylinder relativ zur Vorderkante eines Bedruckstoffbogens auf einem mit dem zweiten Zahnrad verbundenem Gegendruckzylinder vorteilhaften Ausführungsform bilden die Zahnräder zusammen mit der zweiten Verstelleinrichtung eine Passer- oder Registerverstelleinrichtung für den Auftragszylinder.

Bei einer hinsichtlich des Einsatzes der Führung als ein den Vorsprung beim Einkoppeln verdrehendes Widerlager vorteilhaften Ausführungsform ist die Führung exzentrisch am zweiten Zahnrad befestigt oder angeformt.

Bei einer hinsichtlich der Minimierung des Zahnspieles vorteilhaften Ausführungsform besteht das zweite oder vorzugsweise erste Zahnrad aus einem Basisrad und einem verdrehbar und koaxial zu diesem angeordneten Beiläuferrad, das durch mindestens eine Feder in Umfangsrichtung mit dem Basisrad verspannt ist.

Die erfindungsgemäße Vorrichtung und deren Ausführungsformen sind besonders zur Sicherung eines korrekten Zahneingriffs zweier Zahnräder eines Druck- oder Lackierwerkes einer Rotationsdruckmaschine geeignet.

Weitere vorteilhafte Ausführungformen ergeben sich aus der nachfolgenden Beschreibung eines bevorzugten Ausführungsbeispieles und aus der zugehörigen Zeichnung.

In dieser zeigt:
- Figur 1: ein Lackierwerk mit einem Gegendruckzylinder und einem Auftragszylinder, der in eine weit vom Gegendruckzylinder zurückgezogene Passivstellung verlagert ist,
- Figur 2: das Lackierwerk mit dem Auftragszylinder, der aus der Passivstellung in eine Aktivstellung am Gegendruckzylinder verlagert ist,
- Figur 3: ein Zahnrad des Gegendruckzylinders und ein von diesem Zahnrad noch entkoppeltes Zahnrad des Auftragszylinders sowie eine den Zahnrädern zugeordnete Vorrichtung zur Sicherung eines korrekten Zahneingriffs beim Einkoppeln des Zahnrades des Auftragszylinders in das Zahnrad des Gegendruckzylinders,
- Figur 4: die miteinander gekoppelten Zahnräder bei der Aktivstellung des Auftragszylinders gemäß der Figur 2 und
- Figur 5: die gemäß der Figur 4 miteinander gekoppelten Zahnräder in einer dreidimensionalen Darstellung, in welcher eine Winkelanpassung der Vorrichtung zur Sicherung des korrekten Zahneingriffs an Schrägverzahnungen der Zahnräder und eine Winkelanpassung einer von einem Sensor erfaßbaren Markierung an eine Schrägverzahnung des Zahnrades des Auftragszylinders sowie eine aus zur Minimierung des Zahnspieles aus gegeneinander verspannten Teilen bestehende Ausbildung des Zahnrades des Auftragszylinders gezeigt sind.

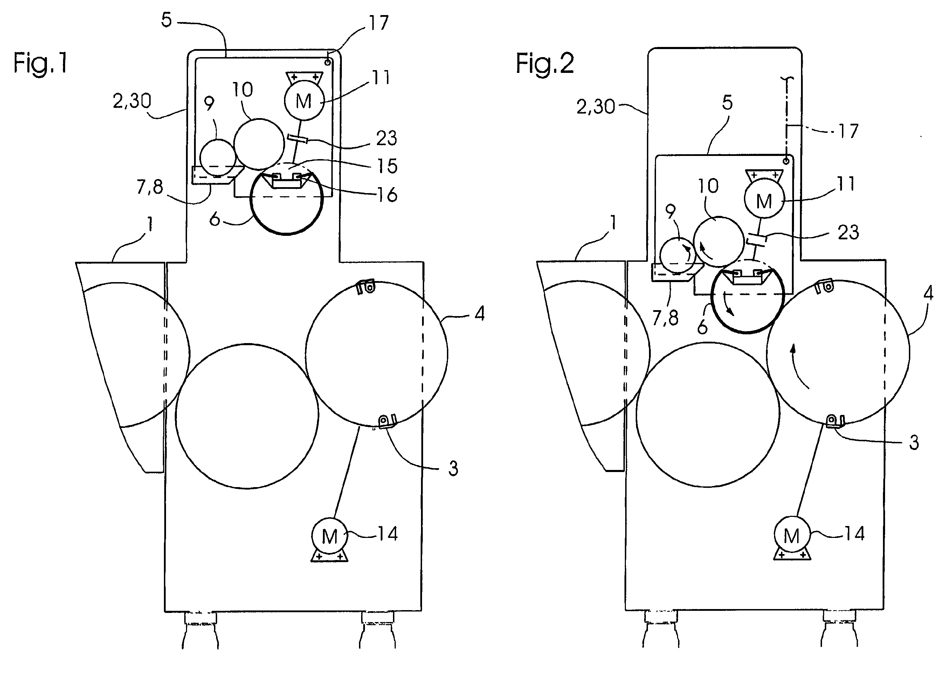

In der Figur 1 ist eine bedruckstoffverarbeitende Maschine 1 ausschnittsweise dargestellt. Bei der Maschine 1 handelt es sich um eine Rotationsdruckmaschine mit mehreren Offsetdruckwerken, die nicht näher dargestellt sind. Der Ausschnitt zeigt schematisch ein Lackierwerk 2 der Maschine 1, welches den Offsetdruckwerken in Bedruckstofftransportrichtung nachgeordnet ist. Das Werk 2 umfaßt einen mit in zwei diametralen Reihen angeordneten Greifern 3 zum Halten eines bogenförmigen Bedruckstoffes ausgerüsteten Gegendruckzylinder 4 und eine wahlweise in eine Aktivstellung - vergleiche Figur 2 - oder eine Passivstellung - vergleiche Figur 1 - verfahrbare Einheit 5.

Die hoch- und runterfahrbare Einheit 5 besteht aus einem Auftragszylinder 6 zum Lackauftrag auf den auf dem Zylinder 4 aufliegenden Bedruckstoff und aus einer Dosiereinrichtung 7 zur dosierten Lackzufuhr zum Zylinder 6. Die Einrichtung 7 besteht aus einer Speicherwanne 8, in welcher sich ein Lackvorrat befindet und in der eine Tauchwalze 9 angeordnet ist, die den Lack aus der Wanne 8 schöpft. Weiterhin gehört zur Einrichtung 7 eine Dosierwalze 10, die zusammen mit der Walze 9 einen Lackfilm erzeugt und den Lack von der Walze 9 auf den Zylinder 6 übertragt.

Um mit der Einheit 5 zu lackieren, kann diese in die Aktivstellung verstellt werden. Zur Wartung der Einheit 5 oder um den Bedruckstoff in den Offsetdruckwerken zu bedrucken und ohne eine anschließende Lackierung im Werk 2 abschmierfrei, d.h. ohne Gefahr eines Anschlagens des Bedruckstoffbogens an den Zylinder 6, durch das Werk 2 hindurch zu fördern, kann die Einheit 5 in die Passivstellung verstellt werden. Auf dem Zylinder 6 kann als ein Zylinderaufzug zur vollflächigen Lackierung des Bedruckstoffes ein Gummituch oder für Spotlackierungen eine Flexodruckform aufgespannt sein. Selbstverständlich kann anstelle des Lackes mit dem Werk 2 auch eine Farbe verdruckt werden.

Durch einen zur Einheit 5 gehörenden elektromotorischen Hilfsantrieb 11 ist der Zylinder 6 bei in die Passivstellung verstellter Einheit 5 rotativ langsam antreibbar, um den Zylinder 6 abwischen zu können, um den Zylinderaufzug auf den Zylinder 6 aufzuziehen oder um ein Verfestigen des Lackes oder Antrocknen des Lackes am Zylinder 6 zu vermeiden. Der Antrieb 11 ist mit dem Zylinder 6 über eine schaltbare Kupplung 23 verbunden, welche gelöst ist, wenn sich die Einheit 5 in ihrer Aktivstellung befindet und der farb- oder lackführende Zylinder 6 auf den Bedruckstoff abrollt. Die Kupplung 23 ist durch Fernbedienung, z.B. über ein Schaltgetriebe, wahlweise verbindbar und lösbar. Das Schaltgetriebe kann z.B. aus einer am Gestell 30 befestigten Knagge bestehen, an welche die Kupplung 23 anstößt und dadurch von der Knagge geschaltet wird, wenn die Einheit 5 mit der Kupplung 23 an der Knagge vorbeifährt. Nach dem Lösen der Kupplung 23 verdreht sich der Zylinder 6 auf Grund seiner durch einen Zylinderkanal 15 bedingten Unwucht in eine Schwerpunktlage, in welcher der Zylinderkanal 15 nach oben weist. Bei in die Aktivstellung verstellter Einheit 5 erfolgt der rotative Antrieb des Zylinders 6 nicht mehr durch den Antrieb 11, sondern über ein Zahnrädergetriebe durch einen elektromotorischen Hauptantrieb 14 der Maschine 1.

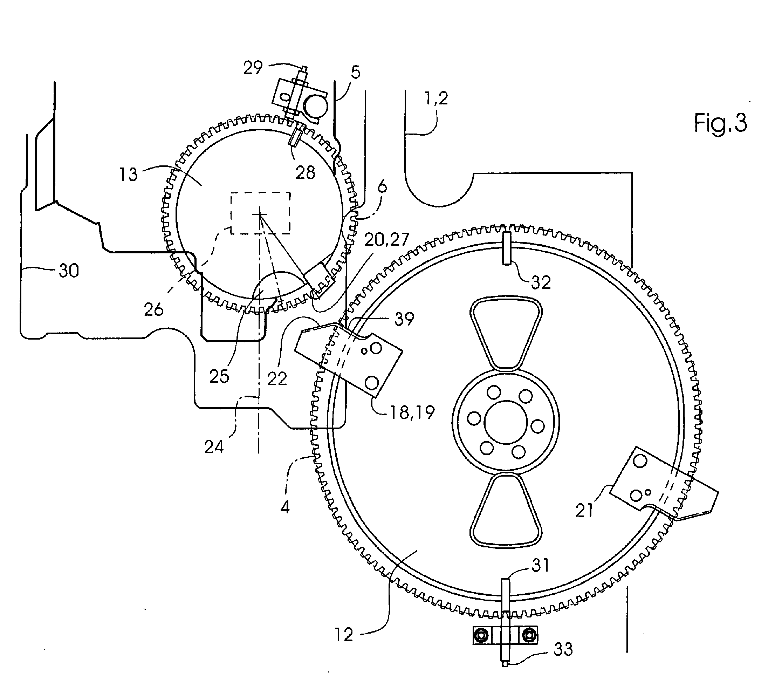

Das Zahnrädergetriebe besteht aus einem zum Zylinder 4 koaxial angeordneten und mit dem Zylinder 4 drehfest verbundenen Zahnrad 12 und einem zum Zylinder 6 koaxial angeordneten und mit dem Zylinder 6 drehfest verbundenen Zahnrad 13. Die Zahnräder 12 und 13 kämmen miteinander, wenn sich der Zylinder 6 in der Aktivstellung - vergleiche Figur 3 - befindet. Der Antrieb 14 treibt beim Lackieren somit den Zylinder 4 und den an den Zylinder 4 angestellten Zylinder 6 zusammen an, wobei aufgrund der Zähneanzahlen der stirnverzahnten Zahnräder 12 und 13 eine Synchronisation der Rotation des Zylinders 6 sichergestellt ist, so daß dessen Umfangsoberflächengeschwindigkeit jener des Zylinders 4 entspricht. Die Zahnräder 12 und 13, welche zu ihrer Befestigung auf Achszapfen der Zylinder 4 und 6 aufgeschoben sind, weisen zueinander verschieden große Teilkreisdurchmesser auf. Der Teilkreisdurchmesser des Zahnrades 12 ist doppelt so groß wie der Teilkreisdurchmesser des Zahnrades 13 dimensioniert, wodurch sichergestellt ist, daß der einfachgroße Zylinder 6 bei jeder vollen Umdrehung des doppeltgroßen Zylinders 4 genau zwei volle Umdrehungen ausführt.

Die Greifer 3 tauchen beim gleichläufigen Aufeinanderabwälzen der Zylinder 4 und 6 bei jeder Umdrehung des Zylinders 6 in den Zylinderkanal 15 ein, in dem eine Spanneinrichtung 16 zum Festklemmen und Spannen des Zylinderaufzuges angeordnet ist.

Bei der Koppelung der Zahnräder 12 und 13 werden die Zähne des Zahnrades 13 mit den Zähnen des Zahnrades 12 in Eingriff gebracht. Vor der Koppelung der Zahnräder 12 und 13, die als Abschluß der mittels eines Kettengetriebes 17 (erste Verstelleinrichtung) erfolgenden Verstellung der Einheit 5 aus der Passiv- in die Aktivstellung erfolgt, müssen die Zahnräder 12 und 13 in bestimmten Drehwinkelstellungen zueinander ausgerichtet werden, um sicherzustellen, daß sich nach der Koppelung ein bestimmter Zahn des Zahnrades 13 in einer für diesen Zahn vorgesehenen Zahnlücke des Zahnrades 12 befindet. Letzteres ist die Voraussetzung für eine der Koppelung nachfolgende kollisionsfreie und passergenaue Rotation der Zylinder 4 und 6 beim Lackieren, wobei die Greifer ohne Kollision mit der Einrichtung 16 in den Kanal 15 eintauchen und sich der Druckanfang des Zylinderaufzuges in der korrekten Lage zu den Greifern 3 und damit zum Druckanfang des Bedruckstoffes befindet. Deshalb ist es erforderlich, das Zahnrad 13 und damit auch den Zylinder 6 zu verdrehen, wenn die Zähne des Zahnrades 13 in Eingriff mit den Zähnen des Zahnrades 12 gefahren werden.

Zur Verdrehung des Zahnrades 13 aus seiner nach dem Lösen der Kupplung 23 auf Grund der Unwucht eingenommenen Drehwinkelstellung und zu dessen Vorpositionierung ist ein Kurvengetriebe 18 vorgesehen, welches aus mindestens einer plattenförmigen und vorderseitig am Zahnrad 12 angeordneten Kurve 19 und einem am Zahnrad 13 angeordneten blockförmigen Vorsprung 20 besteht, welcher von der Kurve 19 geführt wird. Der Vorsprung 20 und die Kurve 19 (Führung) sind somit an verschiedenen der Zahnräder 12 und 13 angeordnet. Da der Zylinder 6, je nachdem welche Drehwinkelstellung der Zylinder 4 nach seiner Stillsetzung inne hat, nach der einen oder nach der anderen Reihe mit den Greifern 3 in Umfangsrichtung ausgerichtet werden kann, ist der Eingriff des bestimmten Zahnes des Zahnrades 13 nicht nur in die bereits genannte eine Zahnlücke des Zahnrades 12, sondern auch in eine zu dieser Zahnlücke diametral liegende weitere Zahnlücke des Zahnrades 12 möglich. Deshalb ist diametral zur Kurve 19 eine dieser entsprechend ausgebildete weitere Kurve 21 am Zahnrad 12 angebracht, die ebenfalls zur Führung des als ein Gleitschuh ausgebildeten Vorsprunges 20 vorgesehen ist.

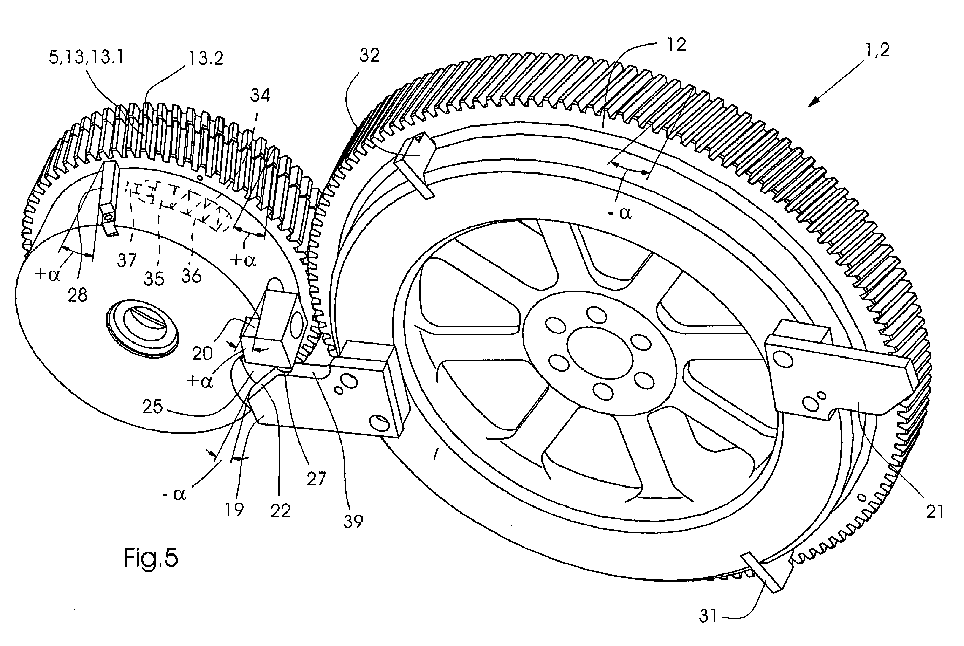

Jede der im Winkel von 180° zueinander versetzten Kurven 19 und 21 hat eine stirnseitige Führungsfläche 22, die relativ zu einer durch die Fläche 22 gehenden Radiallinie des Zahnrades 12 abgewinkelt verläuft, so daß bei Rotation der miteinander in Eingriff befindlichen Zahnräder 12 und 13 eine Kollision jeder Kurve 19 und 21 mit dem Vorsprung 20 ausgeschlossen ist. Wenn während der Rotation der miteinander in Eingriff befindlichen Zahnräder 12 und 13 der bestimmte Zahn des Zahnrades 13 sich in der für den Zahn beim Einkoppeln vorgesehene Zahnlücke des Zahnrades 12 befindet, und der Vorsprung 20 sich somit unmittelbar neben der Kurve 19 befindet, wie dies in der Figur 5 dargestellt ist, verläuft die Fläche 22 in Richtung des Zahnrades 13 mit zunehmendem Abstand zum Vorsprung 20 und steht der Vorsprung 20 außer Kontakt mit der Kurve 19.

Damit die über die Verzahnung des Zahnrades 12 in dessen Radialrichtung hinausragenden Kurven 19 und 21 bei der Rotation nicht mit dem Zahnrad 13 kollidieren, weist letzteres eine umfangsseitige Aussparung 25 auf, in welche die Kurven 19 und 21 bei der Rotation der miteinander kämmenden Zahnräder 12 und 13 eintauchen.

Um eine hohe Laufruhe zu erreichen, sind die Zahnräder 12 und 13 mit Schrägverzahnungen versehen, deren Schrägungswinkel -α, +α in der Figur 5 gezeigt sind. Die Schrägverzahnungen dienen auch zur Verstellung eines Umfangsregisters des Zylinders 6.

Zur Umfangsregisterverstellung wird mittels einer Registerstelleinrichtung 26 (zweite Verstelleinrichtung) das mit dem Zahnrad 12 in Eingriff befindliche Zahnrad 13 in seiner Axialrichtung um einen mit zur notwendigen Registerkorrektur proportionalen Betrag verstellt, wobei eine in Umfangsrichtung wirksame Stellkraft der ein Widerlager bildenden schrägen Zahnflanken des in Axialrichtung festgehaltenen Zahnrades 12 auf die an diesen schrägen Zahnflanken entlanggleitenden schrägen Zahnflanken des Zahnrades 13 ausgeübt wird. Infolge der Stellkraft wird das Zahnrad 13 und mit diesem der Zylinder 6 in Umfangsrichtung relativ zum Zahnrad 12 und zum Zylinder 4 gedrückt und dadurch in eine passer- bzw. registergenaue Drehwinkelstellung verdreht.

Wenn die Fläche 22 der Kurven 19 oder 21, abweichend vom beschriebenen Ausführungsbeispiel, annahmeweise parallel zur Axialrichtung des Zahnrades 13 verliefe, würde sich nach der Registerverstellung eine Fehlstellung des Vorsprunges 20 relativ zur Fläche 22 ergeben. Infolge der Fehlstellung bestünde die Gefahr, daß das bei miteinander im Zahneingriff rotierenden Zahnrädern 12 und 13 zwischen dem Vorsprung 20 und dem sich an letzterem vorbeibewegenden Kurven 19 und 21 erforderliche Spiel nicht mehr vorhanden wäre, so daß der Vorsprung 20 bei jeder Umdrehung an die Kurven 19 und 21 anschlüge.

Um solche Kollisionen zu vermeiden und um den durch die Registerverstellung bewirkten Drehwinkelversatz zu berücksichtigen, sind beim beschriebenen Ausführungsbeispiel die Kurven 19 und 21 und der Vorsprung 20 den Schrägverzahnungen angepaßt ausgerichtet und dreidimensional konturiert. Durch die dreidimensionale Kurvenprofilierung ist sichergestellt, daß die verschiedenen axialen Stellungen des Zahnrades 13 keinerlei Einfluß auf das problemlose Einkoppeln des Zahnrades 13 in das Zahnrad 12 haben. Mit anderen Worten gesagt, verläuft die Fläche 22 mit der gleichen Neigung wie die Verzahnung des Zahnrades 12 zu dessen Rotationsachse und verläuft eine Stützfläche 27 des Vorsprungs 20 mit der gleichen Neigung wie die Verzahnung des Zahnrades 13 zu dessen Rotations-und Mittelachse 40. Die Axialverstellung bewirkt somit eine relativ zur Fläche 22 parallele Verschiebung der Fläche 27.

Bezogen auf die Mittelachse 40 des Zahnrades 13 winkelversetzt zum Vorsprung 20 ist eine Markierung 28 in Form einer sogenannten Fahne am Zahnrad 13 angebracht. Die Markierung 28 ist von einem ein elektrisches Signal abgebenden Sensor 29 erfaßbar, der an der Einheit 5 befestigt ist. Wenn sich die Markierung 28 in genauer Gegenüberlage zum Sensor 29 befindet, erkennt letzterer, daß sich das Zahnrad 13 in der erforderlichen Drehwinkelstellung und die Zahnräder 12 und 13 im korrekten Eingriff miteinander befinden. Eine von der genauen Gegenüberlage abweichende Drehwinkelstellung der Markierung 28 zeigt dem Sensor 29 an, daß, z.B. in Folge eines unerlaubten Bedieneingriffes durch den Drucker während des Einkoppelns, eine fehlerhafte Einkopplung erfolgt ist.

Damit die axiale Verschiebung des Zahnrades 13 zur Registerverstellung auch hinsichtlich der Relativlage der Markierung 28 zum Sensor 29 kompensiert wird, verläuft die Markierung 28 unter dem Schrägungswinkel +α der Schrägverzahnung des Zahnrades 13 relativ zu einer Parallelen der Mittelachse 40. Durch die Schräglage der Markierung 28 kommt bei jeder der verschiedenen Axialstellungen des Zahnrades 13 ein anderer Abschnitt, der in der Draufsicht streifenförmigen Markierung 28 in Gegenüberlage zum Sensor 29, um die bei all den verschiedenen Axialstellungen gleiche korrekte Drehwinkelstellung des Zahnrades 13 dem Sensor 29 anzuzeigen.

Am Zahnrad 12 sind in diametraler und zu den Kurven 19 und 21 winkelversetzter Anordnung Markierungen 31 und 32 vorgesehen, die als am Zahnrad 12 angebrachte Fahnen ausgebildet sind. Zur Kontrolle eines ordnungsgemäßen Einkoppelns der Zahnräder 12 und 13 wird mittels der Markierungen 31 und 32 die korrekte Drehwinkelstellung des Zahnrades 12 überprüft. Die Markierung 31 dient dabei der Kontrolle beim Einkoppeln des Zahnrades 13 in die bei der Kurve 19 liegende Zahnlücke des Zahnrades 12 und die Markierung 32 dient der Kontrolle beim Einkoppeln des Zahnrades 12 in die bei der Kurve 21 liegende Zahnlücke des Zahnrades 12. Ein an einem Gestell 30 der Maschine 1 befestigter und ebenfalls ein elektrisches Signal abgebender Sensor 33 erkennt dabei die korrekte Drehwinkelstellung des Zahnrades 12 anhand einer genauen Gegenüberlage der jeweiligen Markierung 31 oder 32 zum Sensor 33. Da das Zahnrad 12 bei der Registerverstellung nicht in seine Axialrichtung verschoben wird, sind die Markierungen 31 und 32 achsparallel zur Rotationsachse des Zahnrades 4 ausgerichtet.

Wenn die Zahnräder 12 und 13 in korrektem Zahneingriff miteinander sind, hat der Vorsprung 20 den Kontakt zur für den jeweiligen Einkoppelvorgang verwendeten Kurve 19 oder 21 verloren, wobei die Fläche 27 außer Kontakt zu einer Flanke 39 der Kurve 19 oder 21 dicht neben dieser steht.

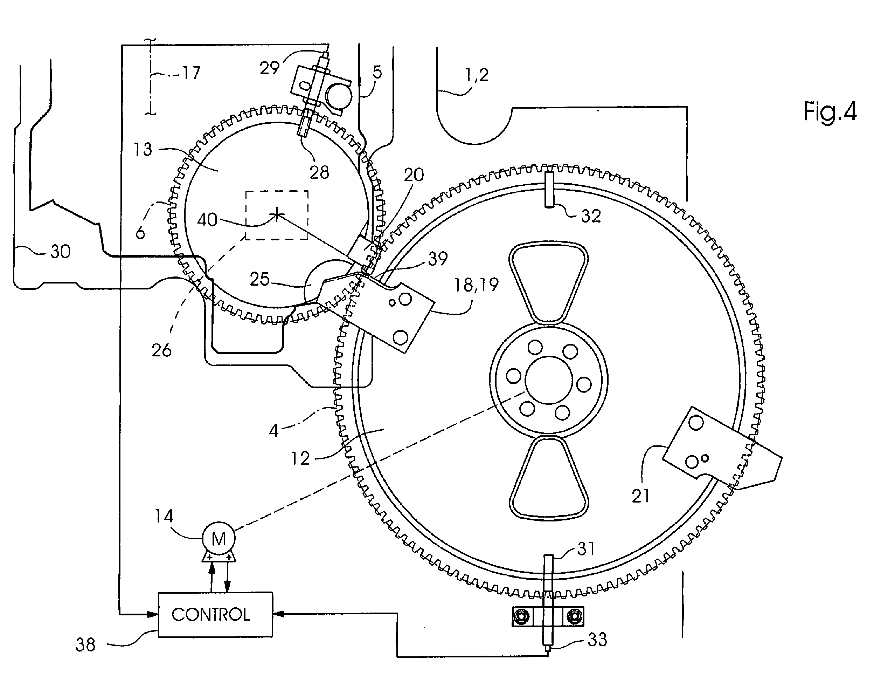

Nach erfolgter Einkoppelung wird die korrekte Position des Zylinders 6 von dem Sensor 29 anhand der Lage der Markierung 28 und die korrekte Position des Zylinders 4 vom Sensor 33 anhand der Lage der mit der beim Einkoppeln verwendeten Kurve 19 oder 21 korrespondierenden Markierung 31 oder 32 - gemäß Figur 4 Markierung 31 - überprüft. Die mit den Sensoren 28 und 33 sowie mit dem Antrieb 14 verknüpfte elektronische Steuereinrichtung 38 gestattet dem Antrieb 14 nur dann eine Rotation der Zahnräder 12 und 13 sowie der Zylinder 4 und 6, wenn der Sensor 33 die vom Antrieb 14 angefahrene korrekte Position des Zahnrades 12 und der Sensor 29 zugleich das Einfädeln des richtigen Zahnes in die für diesen bestimmte Zahnlücke bestätigt. Sind diese Voraussetzungen gegeben, kann der Antrieb 14 zum Lackieren aktiviert werden, wobei der Antrieb 14 nicht nur über das Zahnrad 12 das Zahnrad 13, d.h. nachfolgend erläuterte Räder 13.1 und 13.2 zusammen, antreibt, sondern über das Zahnrad 13 auch die den Walzen 9 und 10 zu deren Antrieb koaxial zugeordneten Zahnräder (nicht gezeigt) rotiert.

Das Zahnrad 13 ist mehrteilig ausgebildet und besteht aus dem Basisrad 13.1 und dem Beiläuferrad 13.2, welches verdrehbar auf einem Absatz des Basisrades 13.1 sitzt. In eine kreisbogenförmige und zur Mittelachse 40 konzentrische Nut 36 des Basisrades 13.1 ragt ein zur Mittelachse 40 achsparalleler Vorsprung 35 hinein. Zur Verspannung des Beiläuferrades 13.2 relativ zum Basisrad 13.1 stützt sich eine schraubenförmige Feder 34 innerhalb der Nut 36 mit ihrem einem Ende am Basisrad 13.1 und mit ihrem anderen Ende am Vorsprung 35 und über diesen am Beiläuferrad 13.2 ab, so daß der Vorsprung 35 gegen einen in etwa in Umfangsrichtung des Basisrades 13.1 einstellbaren Anschlag 37 gedrückt wird. Der Anschlag 37 ist eine Schraube, die in Wirkungsrichtung der Feder 34 und in Längsrichtung der Nut 36 mehr oder weniger in das Basisrad 13.1 eingeschraubt werden kann. Durch eine entsprechende Einstellung des Anschlages 37 wird die Verdrehung des Beiläuferrades 13.2 relativ zu dem Basisrad 13.1 durch die Feder 34 auf ein solches Maß begrenzt, daß bei außer Eingriff befindlichen Zahnräden 12 und 13 eine Zahnlücke des Beiläuferrades 13.2 nur so wenig aus ihrer in etwa fluchtenden Linie mit einer Zahnlücke des Basisrades 13.1 verschoben ist, daß ein Zahn des Zahnrades 12 beim Koppeln der Zahnräder 12 und 13 gleichzeitig in die zueinander verschobenen Zahnlücken eingeschoben werden kann und die Zahnlücke des Beiläuferrades 13.2 durch das Einschieben des Zahnes wieder in ihre im wesentlichen mit der Zahnlücke des Basisrades 13.1 fluchtende Betriebslage zurückgedrückt wird. Mit anderen Worten gesagt, verhindert der Anschlag 37 durch seine beim Zusammenbau der Räder 13.1 und 13.2 zum Zahnrad 13 erfolgende einmalige Justage, das eine in eine Zahnlücke des Basisrades 13.1 und eine Zahnlücke des Beiläuferrades 13.2 zweigeteilte Zahnlücke des Zahnrades 13 beim Abkoppeln des Zahnrades 13 vom Zahnrad 12 in zu starkem Maße zuschnappt, so daß kein Wiedereinkoppeln des Zahnrades 13 in das Zahnrad 12 möglich wäre, da ein der Zahnlücke des Beiläuferrades 13.2 benachbarter Zahn des Beiläuferrades 13.2 ganz oder fast in Fluchtlinie mit der Zahnlücke des Basisrades 13.1 stünde. Die Zahnlücken der Räder 13.1 und 13.2 werden somit durch den Anschlag 37 in für das Einkoppeln des Zahnes des Zahnrades 12 hinreichender Überdeckung gehalten. Bei miteinander in Eingriff. rotierenden Zahnrädern 12 und 13 ist der Vorsprung 35 geringfügig vom Anschlag 37 abgehoben und wird somit durch die Wirkung der Feder 34 das Zahnflankenspiel zwischen den Zahnflanken des Zahnrades 12 und den Zahnflanken des Zahnrades 13 kompensiert bzw. herausgedrückt, so daß ein Zahnflanken-Anlagewechsel vermieden wird, der sich im Druckbild ungünstig auswirken könnte. Die Teile 34 bis 37 sind in mehrfacher Anordnung vorgesehen und z.B. in dreifacher Ausführung jeweils um einen Winkel von 120° in Umfangsrichtung der Räder 13.1 und 13.2 zueinander versetzt angeordnet.

Um nach dem Lackieren die Einheit 5 wieder aus der Aktivstellung - vergleiche Figur 2 - in die Passivstellung - vergleiche Figur 1 - hochzufahren, positioniert die Steuereinrichtung 38 durch eine entsprechende Ansteuerung des Antriebes 14 die Zahnräder 12 und 13 in jene Positionen, welche die Zahnräder 12 und 13 unmittelbar nach dem Einkoppeln eingenommen hatten und die in der Figur 4 gezeigt sind. Anschließend wird die Einheit 5 mittels des Kettengetriebes 7 hochgezogen, wobei der Vorsprung 20 auf der Kurve 19 abgleitet und sich der Zylinder 6 wieder in seine Schwerpunktlage zurückdreht. Wenn nach dem Auskoppeln der Zahnräder 12 und 13 der Vorsprung 20 die Fläche 22 der Kurve 19 nicht mehr berührt, wird der Antrieb 11 durch Schließen der Kupplung 23 wieder mit dem Zylinder 6 antriebsmäßig verbunden.

### Bezugszeichen

- 1: bedruckstoffverarbeitende Maschine
- 2: Lackierwerk
- 3: Greifer
- 4: Gegendruckzylinder
- 5: Einheit

- 6: Auftragszylinder
- 7: Dosiereinrichtung
- 8: Speicherwanne
- 9: Tauchwalze
- 10: Dosierwalze

- 11: Hilfsantrieb
- 12: Zahnrad
- 13: Zahnrad
- 13.1 1: Basisrad
- 13.2: Beiläuferrad
- 14: Hauptantrieb
- 15: Zylinderkanal

- 16: Spanneinrichtung
- 17: Kettengetriebe (erste Verstelleinrichtung)
- 18: Kurvengetriebe
- 19: Kurve
- 20: Vorsprung

- 21: Kurve
- 22: Führungsfläche
- 23: Kupplung
- 24: Gerade
- 25: Aussparung

- 26: Registerstelleinrichtung (zweite Verstelleinrichtung)
- 27: Stützfläche
- 28: Markierung
- 29: Sensor
- 30: Gestell

- 31: Markierung
- 32: Markierung
- 33: Sensor
- 34: Feder
- 35: Vorsprung

- 36: Nut
- 37: Anschlag
- 38: Steuereinrichtung
- 39: Flanke
- 40: Mittelachse

- +α: Schrägungswinkel
- -α: Schrägungswinkel

## Patentansprüche

1. Vorrichtung zur Sicherung eines korrekten Zahneingriffs beim Einkoppeln eines verstellbaren ersten Zahnrades (13) in ein zweites Zahnrad (12) einer bedruckstoffverarbeitenden Maschine (1), bestehend aus einer ersten Verstelleinrichtung (17) zur Verstellung des ersten Zahnrades (13) zum zweiten Zahnrad (12) hin beim Einkoppeln, einem Vorsprung (20) sowie einer Führung (19, 21) zum Führen des Vorsprunges (20) beim Einkoppeln,
**dadurch gekennzeichnet,**
**daß** der Vorsprung (20) exzentrisch zu einem (13) der beiden Zahnräder (12, 13) angeordnet und mit diesem Zahnrad (13) verbunden ist, so daß sich der Vorsprung (20) bei einer Drehung dieses Zahnrades (13) um eine Mittelachse dieses Zahnrades (13) mit diesem Zahnrad (13) mitdreht.

2. Vorrichtung nach Anspruch 1,
**dadurch gekennzeichnet,**
**daß** das Zahnrad, mit dem der Vorsprung (20) verbunden ist, das erste Zahnrad (13) ist.

3. Vorrichtung nach Anspruch 1,
**dadurch gekennzeichnet,**
**daß** das erste Zahnrad (13) in der ersten Verstelleinrichtung (17) zur entlang einer Geraden (24) erfolgenden Verstellung einer Mittelachse (40) des ersten Zahnrades (13) aus einer ersten Stellung mit vom zweiten Zahnrad (12) entkoppelten erstem Zahnrad (13) in eine zweite Stellung mit in das zweite Zahnrad (12) eingekoppelten erstem Zahnrad (13) gelagert ist.

4. Vorrichtung nach Anspruch 1,
**dadurch gekennzeichnet,**
**daß** die Führung (19, 21) eine den Vorsprung (20) nur einseitig führende, sogenannte offene Führung (19, 21) ist.

5. Vorrichtung nach Anspruch 1,
**dadurch gekennzeichnet,**
**daß** die Zahnräder (12, 13) mit je einer Schrägverzahnung versehen sind und die Führung (19, 21) sowie der Vorsprung (20) den Schrägverzahnungen angepaßt sind.

6. Vorrichtung nach Anspruch 5,
**dadurch gekennzeichnet,**
**daß** eine Stützfläche (27) des Vorsprungs (20) einem Schrägungswinkel (+α) der Verzahnung des ersten Zahnrades (13) entsprechend geneigt ist.

7. Vorrichtung nach Anspruch 5,
**dadurch gekennzeichnet,**
**daß** eine Führungsfläche (22) der Führung (19, 21) einem Schrägungswinkel (-α) der Verzahnung des zweiten Zahnrades (12) entsprechend geneigt ist.

8. Vorrichtung nach Anspruch 1,
**dadurch gekennzeichnet,**
**daß** einem (13) der Zahnräder (12, 13) eine zweite Verstelleinrichtung (26) zur in Axialrichtung dieses Zahnrades (13) erfolgenden Verstellung dieses Zahnrades (12) relativ zum anderen der Zahnräder (12, 13) zugeordnet ist.

9. Vorrichtung nach Anspruch 8,
**dadurch gekennzeichnet,**
**daß** dem ersten Zahnrad (13) die Verstelleinrichtung (26) zur zum zweiten Zahnrad (12) achsparallelen Verstellung des ersten Zahnrades (13) zugeordnet ist.

10. Vorrichtung nach Anspruch 8,
**dadurch gekennzeichnet,**
**daß** mit dem in Axialrichtung verstellbaren Zahnrad (13) ein zu diesem koaxial angeordneter Zylinder (6) drehfest verbunden ist und die zweite Verstelleinrichtung (26) zusammen mit den Zahnrädern (12, 13) eine Einrichtung zur Verstellung eines Umfangsregisters des Zylinders (6) bildet.

11. Vorrichtung nach Anspruch 1,
**dadurch gekennzeichnet,**
**daß** die Führung (19, 21) mit dem anderen Zahnrad (12) verbunden ist.

12. Vorrichtung nach Anspruch 1,
**dadurch gekennzeichnet,**
**daß** eines (13) der beiden Zahnräder (12, 13) aus einem Basisrad (13.1) und einem Beiläuferrad (13.2) zusammengesetzt ist, wobei dem Basisrad (13.1) und dem Beiläuferrad (13.2) zur in Umfangsrichtung erfolgenden Verspannung zumindest eine Feder (34) zugeordnet ist.

13. Vorrichtung nach Anspruch 12,
**dadurch gekennzeichnet,**
**daß** das aus dem Basisrad (13.1) und dem Beiläuferrad (13.2) zusammengesetzte Zahnrad (13) das erste Zahnrad (13) ist.

14. Bedruckstoffverarbeitende Maschine (1) mit einer nach einem der Ansprüche 1 bis 13 ausgebildeten Vorrichtung.

## Claims

1. Device for ensuring correct tooth engagement during coupling of an adjustable first gearwheel (13) to a second gearwheel (12) of a printing-material processing machine (1), the device comprising a first adjustment device (17) for adjusting the first gearwheel (13) in a direction towards the second gearwheel (12) during coupling, and further comprising a protrusion (20) and a guide (19, 21) for guiding said protrusion (20) during the coupling,
**characterized in**
**that** said protrusion (20) is disposed eccentrically to one (13) of the two gearwheels (12, 13) and is connected to the one gearwheel (13), so that, during rotation of the one gearwheel (13) about a central axis thereof, said protrusion (20) rotates together with the one gearwheel (13).

2. Device according to claim 1,
**characterized in**
**that** the one gearwheel to which the protrusion is connected is the first gearwheel (13).

3. Device according to claim 1,
**characterized in**
**that** the first gearwheel (13) is mounted in the first adjustment device (17) for adjusting a central axis (40) of the first gearwheel (13) along a straight line (24) from a first position, wherein the first gearwheel (13) is decoupled from the second gearwheel (12), into a second position wherein the first gearwheel (13) is coupled to the second gearwheel (12).

4. Device according to claim 1,
**characterized in**
**that** said guide (19, 21) is what is referred to as an open guide (19, 21) for guiding said protrusion only on one side.

5. Device according to claim 1,
**characterized in**
**that** the gearwheels (12, 13) are provided with a respective helical toothing, and said guide (19, 21) and said protrusion (20) are adapted to said helical toothings.

6. Device according to claim 5,
**characterized in**
**that** a supporting surface (27) of said protrusion (20) is inclined in accordance with an angle of skew (+α) of said toothing of the first gearwheel (13).

7. Device according to claim 5,
**characterized in**
**that** a guide surface (22) of said guide (19, 21) is inclined in accordance with an angle of skew (-α) of said toothing of the second gearwheel (12).

8. Device according to claim 1,
**characterized in**
**that** one (13) of the gearwheels (12, 13) is assigned a second adjustment device (26) for adjusting the one gearwheel (12) relative to the other of the two gearwheels (12, 13) in the axial direction of the one gearwheel (13).

9. Device according to claim 8,
**characterized in**
**that** the first gearwheel (13) is assigned said second adjustment device (26) for adjusting the first gearwheel (13) axially parallel to the second gearwheel (12).

10. Device according to claim 8,
**characterized in**
**that**, connected to the axially adjustable gearwheel (13) so as to be fixed against rotation relative thereto, is a cylinder (6) disposed coaxially with said gearwheel (13), and said second adjustment device (26), together with the gearwheels (12, 13), forms a device for adjusting a circumferential register of the cylinder (6).

11. Device according to claim 1,
**characterized in**
**that** said guide (19, 21) is connected to the other gearwheel (12).

12. Device according to claim 1,
**characterized in**
**that** one (13) of the two gearwheels (12, 13) is formed of a basic wheel (13.1) and an auxiliary wheel 13.2), said basic wheel (13, 1) and said auxiliary wheel (13.2) being assigned at least one spring (34) for bracing in a circumferential direction.

13. Device according to claim 12, ,
**characterized in**
**that** the gearwheel (13) formed of said basic wheel (13.1) and said auxiliary wheel (13.2) is said first gearwheel (13).

14. Printing-material processing machine (1) having a device constructed in accordance with one of claims 1 to 13.

## Revendications

1. Dispositif pour assurer et garantir l'engrènement de denture correct lors du couplage d'une première roue dentée (13) déplaçable, à une deuxième roue dentée (12) d'une machine (1) de traitement de produits imprimés, le dispositif étant constitué d'un premier dispositif de déplacement (17) destiné à déplacer la première roue dentée (13) en direction de la deuxième roue dentée (12) lors du couplage, d'une protubérance (20), ainsi que d'un guidage (19, 21) destiné à guider la protubérance (20) lors du couplage, **caractérisé en ce que** la protubérance (20) est agencée de manière excentrique relativement à l'une (13) des deux roues dentées (12, 13) et est reliée à cette roue dentée (13), de sorte que la protubérance (20), lors d'une rotation de cette roue dentée (13) tourne avec cette roue dentée (13) autour d'un axe central de cette roue dentée (13) .

2. Dispositif selon la revendication 1, **caractérisé en ce que** la roue dentée à laquelle est reliée la protubérance (20), est ladite première roue dentée (13).

3. Dispositif selon la revendication 1, **caractérisé en ce que** la première roue dentée (13) est montée dans le premier dispositif de déplacement (17) pour un déplacement d'un axe central (40) de la première roue dentée (13), s'effectuant le long d'une droite (24), à partir d'une première position où la première roue dentée (13) est découplée de la deuxième roue dentée (12), vers une seconde position où la première roue dentée (13) est couplée à la deuxième roue dentée (12).

4. Dispositif selon la revendication 1, **caractérisé en ce que** le guidage (19, 21) est un guidage dit ouvert (19, 21) ne guidant la protubérance (20) que d'un côté.

5. Dispositif selon la revendication 1, **caractérisé en ce que** les roues dentées (12, 13) sont pourvues chacune d'une denture oblique, et le guidage (19, 21) ainsi que la protubérance (20) sont adaptés aux dentures obliques.

6. Dispositif selon la revendication 5, **caractérisé en ce qu'**une surface d'appui (27) de la protubérance (20) est inclinée conformément à un angle d'inclinaison (+α) de la denture de la première roue dentée (13).

7. Dispositif selon la revendication 5, **caractérisé en ce qu'**une surface de guidage (22) du guidage (19, 21) est inclinée conformément à un angle d'inclinaison (-α) de la denture de la deuxième roue dentée (12).

8. Dispositif selon la revendication 1, **caractérisé en ce qu'**à l'une (13) des roues dentées (12, 13) est associé un deuxième dispositif de déplacement (26) pour un déplacement, s'effectuant dans la direction axiale de cette roue dentée (13), de cette roue dentée (13) par rapport à l'autre des roues dentées (12, 13).

9. Dispositif selon la revendication 8, **caractérisé en ce qu'**à la première roue dentée (13) est associé le dispositif de déplacement (26) pour le déplacement de la première roue dentée (13) parallèlement à l'axe de la deuxième roue dentée (12).

10. Dispositif selon la revendication 8, **caractérisé en ce qu'**à la roue dentée (13) déplaçable dans la direction axiale, est liée de manière fixe en rotation, un cylindre (6) disposé coaxialement à ladite roue dentée (13), et le deuxième dispositif de déplacement (26) forme en combinaison avec les roues dentées (12, 13), un système de réglage du repérage circonférentiel du cylindre (6).

11. Dispositif selon la revendication 1, **caractérisé en ce que** le guidage (19, 21) est relié à l'autre roue dentée (12).

12. Dispositif selon la revendication 1, **caractérisé en ce que** l'une (13) des deux roues dentées (12, 13) est composée de l'assemblage d'une roue de base (13.1) et d'une roue accompagnante (13.2), au moins un ressort (34) étant associé à la roue de base (13.1) et à la roue accompagnante (13.2) pour leur mise en tension réciproque effectuée dans la direction périphérique.

13. Dispositif selon la revendication 12, **caractérisé en ce que** la roue dentée (13) composée de l'assemblage de la roue de base (13.1) et de la roue accompagnante (13.2) est la première roue dentée (13).

14. Machine (1) de traitement de produits imprimés comprenant un dispositif réalisé selon l'une des revendications 1 à 13.
